# EUROPÄISCHE PATENTANMELDUNG

(11) **EP 1 300 797 A1**
(43) Veröffentlichungstag der Anmeldung: **09.04.2003**
(21) Anmeldenummer: 02022150.3
(22) Anmeldetag: 02.10.2002
(51) Int. Cl.: G06K 7/08

(54) **Verfahren und Vorrichtung zur Ortung bewegter Gegenstände**

(30) Priorität: 04.10.2001 DE 10148919
(71) Anmelder: Philips Corporate Intellectual Property GmbH, 20099 Hamburg (DE); Koninklijke Philips Electronics N.V., 5621 BA Eindhoven (NL)
(72) Erfinder: Wenzel, Dirk, Dr., Postfach 50 04 42, 52088 Aachen (DE); Tobergte, Wolfgang, Dr., Postfach 50 04 42, 52088 Aachen (DE); Kunkat, Holger, Postfach 50 04 42, 52088 Aachen (DE)
(74) Vertreter: Zöllner, Christine

(57) **Zusammenfassung**

Um ein Verfahren zur Ortung bewegter Gegenstände bereitzustellen, das eine hohe Genauigkeit der Positionsbestimmung erlaubt und somit Sortierfehler weitgehend eliminiert, sowie eine zur Durchführung des Verfahrens geeignete Vorrichtung zur Verfügung stellen, ist vorgesehen, dass an mindestens einem definierten Ort innerhalb des Lesebereiches eines ortsfest angeordneten Interrogators (16) auf den Gegenstand (12) ein Störimpuls, der ein in Antwort auf ein Sendesignal des Interrogators (16) ausgesendetes Antwortsignal eines von einem bewegten Gegenstand (12) getragenen Transponders (20) beeinflußt, ausgeübt wird und eine Position des Gegenstandes (12) in Abhängigkeit von einem Zeitpunkt des Auftretens der Beeinflussung des Antwortsignals bestimmt wird.

## Beschreibung

Die Erfindung betrifft ein Verfahren und eine Vorrichtung zur Ortung bewegter Gegenstände mit den Merkmalen des Oberbegriffs des Anspruchs 1 bzw. Anspruchs 10. Die Erfindung betrifft ferner Verwendungen des Verfahrens oder der Vorrichtung.

Zur Ortung bewegter Gegenstände ist bekannt, sog. Transponder an den Gegenständen anzuordnen, die in der Lage sind, mit einem an einer Bewegungsstrecke des Gegenstandes ortsfest angeordneten Interrogator zu kommunizieren. Dabei werden im Rahmen der vorliegenden Erfindung unter dem Begriff Transponder (häufig auch als "Tag" bezeichnet) Transponder, Chipkarten und Label zusammengefaßt. Der Interrogator ist eine Sende- und Empfangseinrichtung mit mindestens einer Antenne, die innerhalb eines Lesebereiches ein elektromagnetisches Signal oder Feld aussendet. Sobald der Gegenstand mit dem zugehörigen Transponder in den Lesebereich des Interrogators gelangt und eine Antenne des Transponders das elektromagnetische Sendesignal des Interrogators empfängt, wird ein Sender des Transponders zur Abgabe eines Antwortsignals angeregt. Dieses wird seinerseits wiederum durch einen Empfänger des Interrogators detektiert, dekodiert und konvertiert. Üblicherweise handelt es sich bei dem Antwortsignal des Transponders um ein mit dem Sendesignal des Interrogators gemäß einer mathematischen Beziehung moduliertes Signal. In Anwendungen, bei denen es neben der reinen Positionsbestimmung der bewegten Gegenstände auch auf eine Identifizierung und nachfolgende Sortierung der Gegenstände ankommt, ist ferner bekannt, das Antwortsignal mit einer den Transponder individualisierenden Information zu überlagern. Auf diese Weise erhält der Interrogator nicht nur Informationen über die Positionen der Gegenstände, sondern auch über ihre individuelle Reihenfolge.

Problematisch bei diesem Verfahren ist, dass das Antwortsignal des Transponders abhängig ist von einer jeweiligen Ansprechempfindlichkeit sowie von einer räumlichen Orientierung des Transponders relativ zu der Interrogatorantenne. Hierdurch wird die Ortung der Transponder bzw. der Gegenstände ungenau. Dieser Effekt kann dazu führen, dass nahe beieinander liegende Gegenstände nicht aufgelöst werden, ihre Reihenfolge falsch detektiert wird und es zu nachfolgenden Sortierfehlern kommt.

Ein erster Ansatz, dieses Problem zu lösen, besteht in einer Auswertung der Amplitude des rückmodulierten Antwortsignals des Transponders. Dabei wird üblicherweise der Maximalwert eines Amplitudenverlaufs der räumlichen Mitte des Lesebereichs der Interrogatorantenne zugeordnet. Da aber je nach Orientierung des Transponders der Amplitudenmaximalwert nicht zwangsläufig mit der räumlichen Mitte des Lesebereichs des Interrogators übereinstimmen muß, kommt es auch hier zu ungenauen Positionsbestimmungen und zu Sortierfehlern. So ist es aus diesem Grund nicht möglich, nahe aufeinander folgende Transponder zu unterscheiden.

Der vorliegenden Erfindung liegt daher die Aufgabe zugrunde, ein Verfahren zur Ortung bewegter Gegenstände bereitzustellen, das eine hohe Genauigkeit der Positionsbestimmung erlaubt und somit Sortierfehler weitgehend eliminiert. Ferner soll eine zur Durchführung des Verfahrens geeignete Vorrichtung zur Verfügung gestellt werden.

Erfindungsgemäß wird diese Aufgabe durch ein Verfahren mit den im Anspruch 1 genannten Merkmalen und eine Vorrichtung nach Anspruch 10 gelöst. Dadurch, dass an mindestens einem definierten Ort innerhalb des Lesebereichs des Interrogators ein das Antwortsignal des Transponders beeinflussender Störimpuls ausgeübt wird und eine Position des Gegenstandes in Abhängigkeit von einem Zeitpunkt des Auftretens der Beeinflussung des Antwortsignals bestimmt wird, wird eine Genauigkeit der Ortung gegenüber bekannten Verfahren deutlich erhöht. Innerhalb des Lesebereichs des Interrogators markiert der im Folgenden noch näher zu definierende Störimpuls einen Ort, der mit großer Genauigkeit mit dem Auftreten einer Störung des Antwortsignals des Transponders, insbesondere einer sprunghaften Unstetigkeit des Antwortsignals, korreliert werden kann. Mit anderen Worten kann mit großer Zuverlässigkeit davon ausgegangen werden, dass zu dem Zeitpunkt, an dem die Beeinflussung des Antwortsignals durch den Interrogator detektiert wird, sich der Transponder bzw. der betreffende Gegenstand an dem definierten Störort befindet. Auf diese Weise können auch nahe beieinander liegende Gegenstände mit hinreichender Genauigkeit detektiert und sortiert werden.

Gemäß einer vorteilhaften Ausgestaltung des Verfahrens handelt es sich bei dem Störimpuls um einen mechanischen Impuls, der eine die Bewegung des Gegenstandes überlagernde Störbewegung des Gegenstandes verursacht. Beispielsweise kann innerhalb der Bewegungsstrecke des Gegenstandes, insbesondere innerhalb eines Transportbandes, eine Stufe angeordnet werden, die eine Kippbewegung des Gegenstandes und des Transponders verursacht, wodurch kurzzeitig eine Orientierung des Transponders bezüglich des Interrogators verändert wird. Da das Antwortsignal des Transponders, insbesondere seine Amplitude, von der Orientierung des Transponders abhängt, bewirkt die hier als Kippbewegung ausgestaltete Störbewegung des Gegenstandes eine Unstetigkeit im Verlauf der Amplitude des Antwortsignals. Ebenso kann die mechanisch verursachte Störbewegung eine Drehung und/oder eine Richtungsänderung des Gegenstandes sein, die durch entsprechende, innerhalb einer Förderstrecke angeordnete Dreh- oder Richtungsänderungsanordnungen bewirkt werden. Alternativ oder zusätzlich kann die Störbewegung auch eine Vibration des Gegenstandes sein, hervorgerufen durch eine am Störort erfolgende mechanische Erschütterung des Gegenstandes und/oder durch eine akustische Schalleinwirkung auf diesen.

In einer alternativen vorteilhaften Ausführung der Erfindung verursacht der Störimpuls eine Beeinflussung des elektromagnetischen Feldes und/oder einer Resonanzfrequenz des Transponders an dem definierten Ort (Störort) innerhalb des Lesebereichs des Interrogators. Demnach kann der Störimpuls beispielsweise eine lokale Temperaturänderung, ein durch ein entsprechend angeordnetes Metall ausgeübter magnetischer Einfluß, eine auf das elektromagnetische Feld wirkende Schirmungsmaßnahme oder Feldführungsmaßnahme und/oder eine Änderung einer Dielektrizitätskonstante und/oder Permeabilität eines umgebenden Mediums oder dergleichen sein.

Eine weitere vorteilhafte Ausgestaltung sieht vor, dass das Antwortsignal des Transponders eine den Transponder individualisierende Information enthält. Diese kann insbesondere in Form einer transponderspezifischen Trägerfrequenz gegeben sein. Die Bereitstellung einer derartigen individualisierenden Information ist immer dann notwendig, wenn die Gegenstände nicht nur geortet, sondern auch identifiziert und sortiert werden sollen.

Das erfindungsgemäße Verfahren sowie die erfindungsgemäße Vorrichtung können besonders vorteilhaft zum Orten und/oder Sortieren von Gegenständen auf Transportbändern verwendet werden. Insbesondere können Gepäckstücke auf Transportbändern in Flughäfen oder Pakete auf Fließbändern geortet und gemäß ihrer jeweiligen Bestimmung sortiert und weitertransportiert werden. Das Verfahren eignet sich ferner zur Ortung und/oder Sortierung von auf Fließbändern bewegten Gegenständen in Fertigungsprozessen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Fig. 1: eine Vorrichtung und ein Verfahren zum Orten bewegter Gegenstände gemäß dem Stand der Technik und
- Fig. 2: eine Vorrichtung und ein Verfahren zum Orten bewegter Gegenstände gemäß einer vorteilhaften Ausgestaltung der Erfindung.

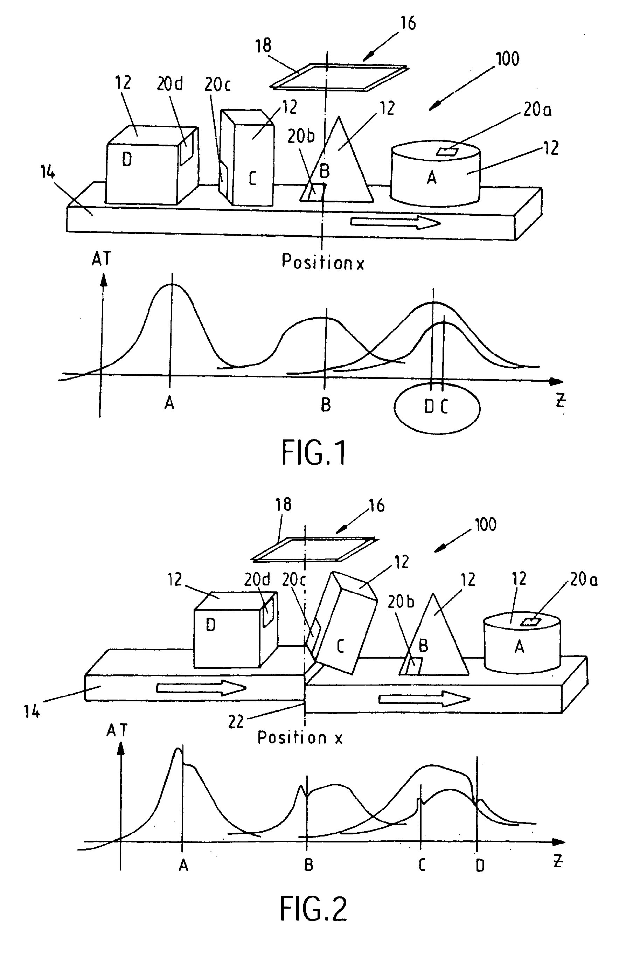

Fig. 1 zeigt im oberen Teil der Abbildung eine Anzahl von unterschiedlich gestalteten und orientierten Gegenständen 12, die auf einem Transportband 14 in Pfeilrichtung bewegt werden. Eine Vorrichtung zum Orten der bewegten Gegenstände 12 ist insgesamt mit 100 bezeichnet. Die Vorrichtung 100 umfaßt einen ortsfest angeordneten Interrogator 16, der im Wesentlichen eine Sende- und Empfangseinrichtung ist. Dargestellt ist hier lediglich eine Antenne 18 des Interrogators 16, die dem Senden und Empfang eines elektromagnetischen Signals oder Feldes dient. In Abweichung von der Darstellung können auch mehrere unterschiedlich angeordnete Interrogatorantennen 18 vorgesehen sein. Die Vorrichtung 100 umfasst ferner Transponder 20, von denen jeweils mindestens einer an jedem Gegenstand 12 angeordnet ist.

Der Interrogator 16 bzw. die Antenne 18 sendet innerhalb eines Lesebereichs, der sich im Wesentlichen senkrecht unterhalb der durch die Antenne 18 begrenzten Fläche erstreckt, ein Sendesignal, insbesondere ein Hochfrequenzsignal, aus. Sobald ein Transponder 20 eines Gegenstandes 12 in den Lesebereich des Interrogators 16 eintritt, wird das Sendesignal von einer nicht näher dargestellten Antenne des Transponders 20 empfangen, woraufhin ein ebenfalls nicht dargestellter Sender des Transponders 20 ein mit dem Sendesignal moduliertes Antwortsignal aussendet. Dabei kann das Antwortsignal vorteilhaft eine transponderspezifische Information, insbesondere in Form einer individuellen Trägerfrequenz, enthalten, die eine Identifizierung der unterschiedlichen Gegenstände 12 ermöglicht. Eine nicht dargestellte, dem Interrogator 16 zugeordnete Auswerteeinrichtung verarbeitet das empfangene Antwortsignal weiter, um beispielsweise dem Transportband 14 nachgeschaltete Sortiereinrichtungen (nicht dargestellt) entsprechend anzusteuern.

Mit dieser bekannten Anordnung ist nur eine in vielen Fällen unzureichende Positionsbestimmung der Gegenstände 12 möglich. Dieses Problem ist im unteren Teil der Fig. 1 anhand von zeitlichen Verläufen der von den Transpondern 20 rückmodulierten Antwortsignale erläutert. Dargestellt ist der Amplitudenverlauf der Antwortsignale der Transponder 20 über der Zeit Z. Die Amplitude AT eines Transponderantwortsignals hängt sowohl von der Entfernung des Transponders 20 von der Interrogatorantenne 18 als auch von der räumlichen Orientierung des Transponders 20 relativ zur Antenne 18 ab. Dabei kommt es vor allem auf eine Größe einer auf die Fläche der Antenne 18 orthogonal projizierten Fläche des Transponders 20 an. Je näher sich der Transponder 20 zur Antenne 18 befindet und je größer die von der Antenne 18 "gesehene" Fläche des Transponders 20 ist, desto größer ist die Amplitude des Transponderantwortsignals.

Im dargestellten Beispiel durchläuft zunächst der Gegenstand A den Lesebereich der Interrogatorantenne 18. Da sich der Transponder 20a des Gegenstandes A auf der dem Interrogator 16 zugewandten Seite des Gegenstandes und somit relativ nah zur Antenne 18 befindet und der Transponder 20a der Antenne 18 seine größtmögliche Fläche zuwendet, zeigt die individuelle, dem Gegenstand A zugehörige Amplitudenkurve eine relativ hohe Intensität und auch einen symmetrischen Verlauf. Der Verlauf des Antwortsignals des Transponders 20 wird von der Auswerteeinheit des Interrogators 16 ausgewertet, wobei üblicherweise ein Maximum des Amplitudenverlaufs der räumlichen Mitte der Interrogatorantenne 18 zugeordnet wird. Aufgrund der optimalen räumlichen Orientierung des Transponders 20a des Gegenstandes A ist hier eine genaue Ortung problemlos möglich.

Hingegen zeigt der Amplitudenverlauf des rückmodulierten Antwortsignals des tetraedischen Gegenstandes B wegen der schrägen Orientierung des entsprechenden Transponders 20b zur der Antenne 18 einen unsymmetrischen und breiten Verlauf. Hierdurch wird die Positionsbestimmung des Gegenstandes B mit Hilfe des Maximalwertes des Amplitudenverlaufs deutlich unzuverlässiger. Dennoch gelingt aufgrund des großen Abstandes des Transponders 20b des Gegenstandes B zu den benachbarten Transpondern 20a, 20c eine zutreffende Bestimmung der Reihenfolge.

Problematisch wird die Bestimmung von Position und Reihenfolge der Gegenstände C und D, deren Transponder 20c und 20d nahe aufeinander folgend angeordnet sind und zudem eine ungünstige Ausrichtung zur Antenne 18 aufweisen. Der Transponder 20c von Gegenstand C, der vor Gegenstand D in den Lesebereich des Interrogators 16 gelangt, wird zunächst nicht von der Antenne 18 "gesehen", da der Körper des Gegenstandes C das elektromagnetische Feld des Lesebereichs abschirmt. Umgekehrt wird der Transponder 20d des Gegenstandes D bereits angeregt und durch die Antenne 18 detektiert, zu einem Zeitpunkt, an dem der Gegenstand D selbst sich noch im Wesentlichen außerhalb des Lesebereichs befindet. Infolgedessen wird das Maximum der Amplitude des Transponders 20d noch vor dem Maximum von Transponder 20c ermittelt. Die Gegenstände C und D werden daher im Ergebnis mit vertauschter Reihenfolge detektiert und nachfolgend fehlerhaft sortiert.

Dieses Problem wird mit einer in Fig. 2 dargestellten erfindungsgemäßen Vorrichtung 100 gelöst. Dabei werden in Fig. 2 die gleichen Bezugszeichen für die gleichen Elemente wie in Fig. 1 verwendet und nicht nochmals erläutert. Die erfindungsgemäße Vorrichtung 100 zur Ortung von bewegten Gegenständen 12 umfaßt neben dem Interrogator 16 und den Transpondern 20 einen Störgeber 22, der an einem definierten Ort an Position X innerhalb des Lesebereiches des Interrogators 16 angeordnet ist und einen Störimpuls auf den Gegenstand 12 ausübt, so dass das Antwortsignal des Transponders 20 beeinflußt wird.

Im dargestellten Beispiel übt der Störgeber 22 einen mechanischen Störimpuls auf den Gegenstand 12 aus und ist als eine Stufe an Position X des Transportbandes 14 bzw. als ein Höhenversatz zweier nacheinandergeschalteter Transportbänder 14 ausgestaltet. Ein Gegenstand 12, der über die Stufe 22 bewegt wird, führt an einem bestimmten Zeitpunkt, an dem ein Übergewicht eines über die Stufe 22 überhängenden Bereiches des Gegenstandes 12 auftritt, eine Kippbewegung aus (vergleiche Gegenstand C in Figur 2). Diese Kippbewegung verursacht eine Veränderung des Abstandes des an dem Gegenstand 12 angeordneten Transponders 20 zur Interrogatorantenne 18 sowie seiner räumlichen Orientierung. Infolgedessen verändert sich die rückmodulierte Amplitude des Antwortsignals genau zu diesem Zeitpunkt sprunghaft. Diese unstetige Sprungstelle im Amplitudenverlauf überlagert sich in auffälliger Weise mit dem durch die Linearbewegung des Transportbandes 14 verursachten stetigen üblichen Verlauf (vergleiche unterer Teil Fig. 2). Verfahrensgemäß wird nun mit Hilfe üblicher mathematischer Algorithmen die Sprungstelle in jedem individuellen Amplitudenverlauf der einzelnen Transponder 20 bestimmt und der Zeitpunkt des Auftretens der Sprungstelle mit der Position X der Stufe 22 korreliert. Mit anderen Worten wird davon ausgegangen, dass zum Zeitpunkt des Auftretens der Sprungstelle im Antwortsignal des Transponders 20 sich der zugehörige Gegenstand 12 mit seinem räumlichen Zentrum an der Position X befindet.

Wie insbesondere an den Amplitudenverläufen der Antwortsignale der Transponder 20c und 20d der Gegenstände C und D zu erkennen ist, gelingt erfindungsgemäß eine korrekte Positions- und Reihenfolgenbestimmung auch von Gegenständen 12, deren Transponder 20 nahe einander angeordnet sind. Prinzipbedingt muß kein Mindestabstand zwischen benachbarten Transpondern 20 vorgesehen sein. Auf diese Weise kann beispielsweise im Falle von Fließbändern in Fertigungsanlagen ein höherer Auslastungsgrad erzielt werden.

Es ist ferner hervorzuheben, dass auch unbeabsichtigte Feldstörungen die Zuverlässigkeit des erfindungsgemäßen Verfahrens nicht beeinträchtigen, da diese alle Transponder 20 gleichermaßen betreffen und somit erkennbar sind.

Das erfindungsgemäße Prinzip des Störimpulses zur Erleichterung der Ortung wurde vorliegend am Beispiel eines durch eine Stufe hervorgerufenen mechanischen Störimpulses erläutert. Es versteht sich jedoch, dass mechanische Störimpulse auch auf andere Weise erzeugt werden können und dass es ferner möglich ist, auch nicht mechanische Störimpulse auszuüben, die das elektromagnetische Feld und/oder die Transponderresonanzfrequenz an einer definierten Position X innerhalb des Lesebereiches des Interrogators beeinflussen. Derartige Störimpulse wurden vorstehend bereits erläutert. In jedem Fall wird der Störimpuls das Antwortsignal des Transponders sprunghaft beeinflussen und somit eine exakte Positionsbestimmung des zugehörigen Gegenstandes ermöglichen.

### BEZUGSZEICHENLISTE

- 100: Vorrichtung zur Ortung bewegter Gegenstände
- 12: Gegenstand
- 14: Transportband
- 16: Interrogator
- 18: Interrogatorantenne
- 20: Transponder
- 22: Störgeber/Stufe

## Patentansprüche

1. Verfahren zur Ortung bewegter Gegenstände, wobei mindestens ein relativ zu einer Bewegungsstrecke des Gegenstandes (12) ortsfest angeordneter Interrogator (16) innerhalb eines Lesebereiches ein elektromagnetisches Sendesignal aussendet, der bewegte Gegenstand (12) mindestens einen Transponder (20) trägt, der in Antwort auf das Sendesignal ein Antwortsignal aussendet, und der Interrogator (16) das Antwortsignal empfängt und auswertet,
**dadurch gekennzeichnet, dass** an mindestens einem definierten Ort innerhalb des Lesebereiches des Interrogators (16) ein das Antwortsignal des Transponders (20) beeinflussender Störimpuls ausgeübt wird und eine Position des Gegenstandes (12) in Abhängigkeit von einem Zeitpunkt des Auftretens der Beeinflussung des Antwortsignals bestimmt wird.

2. Verfahren nach Anspruch 1,
**dadurch gekennzeichnet, dass** der Störimpuls ein mechanischer Impuls ist, der eine die Bewegung des Gegenstandes (12) überlagernde Störbewegung des Gegenstandes (12) verursacht.

3. Verfahren nach Anspruch 2,
**dadurch gekennzeichnet, dass** die Störbewegung eine durch eine innerhalb der Bewegungsstrecke angeordnete Stufe verursachte Kippbewegung ist und/oder eine Drehung und/oder eine Richtungsänderung des Gegenstandes (12) und/oder eine durch eine mechanische Erschütterung und/oder durch eine akustische Schalleinwirkung verursachte Vibration des Gegenstandes (12).

4. Verfahren nach Anspruch 1,
**dadurch gekennzeichnet, dass** der Störimpuls eine Beeinflussung eines elektromagnetischen Feldes an dem definierten Ort innerhalb des Lesebereichs und/oder einer Resonanzfrequenz des Transponders (20) verursacht.

5. Verfahren nach Anspruch 4,
**dadurch gekennzeichnet, dass** der Störimpuls eine Temperaturänderung, ein durch ein angeordnetes Material ausgeübter magnetischer Einfluß, eine Schirmungsmaßnahme, eine Feldführungsmaßnahme, eine Änderung einer Dielektrizitätskonstante eines umgebenden Mediums und/oder eine Änderung einer Permeabilität des umgebenden Mediums ist.

6. Verfahren nach einem der vorhergehenden Ansprüche,
**dadurch gekennzeichnet, dass** der Interrogator (16) und/oder der Transponder (20) jeweils mindestens eine Antenne zum Senden und Empfangen von elektromagnetischen Signalen, insbesondere von Hochfrequenz-Signalen, umfassen.

7. Verfahren nach einem der vorhergehenden Ansprüche,
**dadurch gekennzeichnet, dass** das Antwortsignal des Transponders (20) eine den Transponder (20) individualisierende Information enthält.

8. Verfahren nach einem der vorhergehenden Ansprüche,
**dadurch gekennzeichnet, dass** eine Amplitude des Antwortsignals ausgewertet wird.

9. Verfahren nach einem der vorhergehenden Ansprüche,
**dadurch gekennzeichnet, dass** die durch das Störsignal verursachte Beeinflussung des Antwortsignals eine sprunghafte Unstetigkeit insbesondere der Amplitude des Signals ist.

10. Vorrichtung (100) zur Ortung bewegter Gegenstände (12) mit mindestens einem relativ zu einer Bewegungsstrecke des Gegenstandes (12) ortsfest angeordneten Interrogator (16), der innerhalb eines Lesebereiches ein elektromagnetisches Sendesignal aussendet, mindestens einem dem bewegten Gegenstand (12) zugeordneten Transponder (20), der in Antwort auf das Sendesignal ein Antwortsignal aussendet, und mit einer Auswerteeinheit, die das von dem Interrogator (16) empfangene Antwortsignal des Transponders (20) auswertet,
**dadurch gekennzeichnet, dass** an mindestens einem definierten Ort innerhalb des Lesebereiches des Interrogators (16) ein Störgeber (22) angeordnet ist, der einen das Antwortsignal des Transponders (20) beeinflussenden Störimpuls auf den Gegenstand (12) ausübt.

11. Vorrichtung nach Anspruch 10,
**dadurch gekennzeichnet, dass** der Störgeber (22) einen mechanischen Impuls ausübt, der eine die Bewegung des Gegenstandes (12) überlagernde Störbewegung des Gegenstandes (12) verursacht.

12. Vorrichtung nach Anspruch 11,
**dadurch gekennzeichnet, dass** der Störgeber (22) eine innerhalb der Bewegungsstrecke angeordnete Stufe und/oder eine Dreheinrichtung und/oder eine Richtungsänderungseinrichtung ist und/oder eine Vorrichtung ist, die eine mechanische und/oder akustische Erschütterung des Gegenstandes (12) verursacht.

13. Vorrichtung nach Anspruch 10,
**dadurch gekennzeichnet, dass** der Störgeber (22) eine Beeinflussung des elektromagnetischen Feldes an dem definierten Ort und/oder einer Transponder-Resonanzfrequenz verursachende Einrichtung ist.

14. Vorrichtung nach einem der Ansprüche 10 bis 13,
**dadurch gekennzeichnet, dass** die Auswerteeinheit dem Interrogator (16) zugeordnet ist.

15. Verwendung eines Verfahrens nach einem der Ansprüche 1 bis 9 oder einer Vorrichtung nach einem der Ansprüche 10 bis 14,
zur Ortung und/oder zum Sortieren von Gegenständen auf Transportbändern, insbesondere von Gepäckstücken auf Gepäckbändern in Flughäfen oder von Paketen auf Fließbändern, oder zur Ortung von bewegten Gegenständen in Fertigungsprozessen.
